Europäisches Patentamt

European Patent Office

Office européen des brevets

(11) Publication number: **0 379 760**
**A1**

(12) **EUROPEAN PATENT APPLICATION**

(21) Application number: **89300775.7**

(22) Date of filing: **26.01.89**

(51) Int. Cl.⁵: **F01N 3/02, B03C 3/06**

(43) Date of publication of application:
**01.08.90 Bulletin 90/31**

(84) Designated Contracting States:
**DE FR GB IT SE**

(71) Applicant: **UNIVERZITA KOMENSKEHO**
**No 6 Safarikovo namesti**
**Bratislava(CS)**

(72) Inventor: **Morvova, Marcela**
**No. 2 Bihariho**
**Dunajska Streda(CS)**
Inventor: **Morva, Imrich**
**No. 2 Bihariho**
**Dunajska Streda(CS)**
Inventor: **Sobek, Viktor**
**No. 32 U1.29 augusta**
**Bratislava(CS)**
Inventor: **Cordas, Juraj**
**No. 5 Szaboova**
**Bratislava(CS)**

(74) Representative: **Ablewhite, Alan James et al**
**MARKS & CLERK 57/60 Lincoln's Inn Fields**
**London WC2A 3LS(GB)**

(54) **Device for continuously reducing concentration of carbon monoxide and other harmful types of emission.**

(57) A device for continuously reducing concentrations of carbon monoxide and other harmful emissions from engines etc, comprises a plurality of corona discharge tubes of coaxial wire/cylinder type, the device being characterized in that the individual corona discharged tubes are arranged in geometric configuration and are connected in parallel with one another, and that each of them is connected, via a resistor (5), to a common high-voltage source (6), external electrodes (2) being connected with a condensor.

FIG.1

# DEVICE FOR CONTINUOUSLY REDUCING CONCENTRATION OF CARBON MONOXIDE AND OTHER HARMFUL TYPES OF EMMSSION

The invention concerns the problem of reducing the pollution of environment by harmful emissions of various origin, and particularly the problem of reducing the carbon monoxide concentration. Apart from this, it affects also other harmful substances such as nitrogen oxides ($NO_x$), hydrocarbons ($CH_x$), lead compounds, both solid and liquid particles.

On industrial scale, harmful gaseous emissions are countered particularly by means of various types of separator. The main ways of reducing contaminant contents in road traffic are focussed on structural adaptations of internal combustion engines so as to combust such substances immediately in the exhaust manifold. This can be achieved by applying thermal and catalytic reactors as well as by using electric discharge.

The Czechoslovak Inventorship Certificate No. 178,566 discloses a process for reducing concentrations of polycyclic aromatic hydrocarbons in exhaust gases by conducting them through a corona discharge of coaxial configuration, the gases being mixed with pure air. The process is based upon the action of the so-called electric wind and on the oxidation of aromatic bonds of polycyclic aromatic hydrocarbons whereby oxidation products arise. The process fails to sufficiently treat carbon monoxide (CO), nitrogen oxides ($NO_x$) and lead compounds. The concentration of polycyclic aromatic hydrocarbons in exhaust gases reaches a value of from 0.3 to 0.5 per cent. Such a value can be mastered by using a single discharge tube as referred to in the certificate. In contradistinction, the carbon monoxide concentration in exhaust gases varies within the range of from 2 to 6 per cent or even more. To remove such an amount it is necessary to employ a system of a plurality of identical discharge tubes of which one is capable to treat exhaust gases produced by about 50 $cm^3$ of the total engine capacity. In this case the presence of air impairs the efficiency of the device by several digits, and particularly for the following reasons: For the fundamental reaction of CO + OH to dispose of carbon monoxide, the water vapour dissociation is necessary. However, the air presence reduces the water dissociation degree, and the reaction of CO + OH is replaced by the reaction of $CO^+$ + $O^-$ the speed of which is fourteen digits lower than that of the reaction of CO + OH.

According to the Czechoslovak Inventorship Certificate No. 195,115 there is used another configuration of electrodes, viz a grid orientated perpendicularly to the exhaust gas flow, and a cylinder indentical with the exhaust manifold. Under these conditions, it is a half-opened discharge that is concerned here, since no axial effect on the exhaust gases occurs. Apart from this, the employed source has an insufficient output, so that a pulse-type discharge will arise, which is characteristic for a pre-initial or initial stage of corona discharge only. In this case the electric wind does not assume its function at all; the discharge does not affect solid and liquid constituents at all and its effect on carbon monoxide is hardly observable. No measurements of apparatus efficiency nor the operation mechanism have not been referred to.

In the PCT WO 84/02743 a combined apparatus has been disclosed, wherein a chemical filter (activated carbon) and an electric filter in the form of corona discharge are used. The apparatus comprises an electrochemical negatively charged high-voltage electrode consisting of several grids which are directly electrically connected with one another so that their potential is alike. In the inter-electrode space there is activated carbon which retains solid particles, some gaseous components (CO, hydrocarbons), and especially water. The grids form an incomplete circle. In a lower circular recess there is provided a receptacle into which fall or run solid particles and water respectively, with the co-operation of vehicle vibrations. Such anegatively charged electrode is electrically insulated from an annular collector earth electrode. An incompletely closed corona discharge burns between the two electrodes. The electric wind manifests itself in the system only partially. As results from a 40-60 W output and from the existance of a chemical filter even upstream of the discharge zone, the discharge burns in a space free of water and solid particles so that the reaction of CO + OH cannot take place. The carbon monoxide disposal is achieved partly by adsorption on activated carbon, partly by the reaction of $CO^+$ + $O^-$ which, however, is many digits slower than the reaction of CO + OH.

In the co-incident Soviet Union Inventorship Certificates Nos. 977,842 and 977,848 there are disclosed two respective apparatuses operating on one and the same principle. The apparatuses are based on a positive corona discharge (in the '843 there are described two discharges in a different arrangement), the discharge burning in exhaust gases and having an electric point/plane arrangement. The system is situated axially in the exhaust manifold whereby a mixture of exhaust gases is activated and gives rise to positive $C_nH_m$ ions. In such a mixture there is immixed fresh air in which, prior to the mixing, a negative corona discharge burns (rise of O⁻) in the point/plane systems are too small and none of the electrodes reaches the exhaust system wall, the electric wind does not manifest itself here.

Among the various discharge systems, it is the apparatus based upon the corona discharge of axial configuration that is considered to be the most efficient. Such an apparatus operates in collaboration with additional air and affects polycyclic aromatic hydrocarbons. Disadvantages of a simple apparatus of this type: Due to the additional air supply, the effect of the appartus on carbon monoxide is limited. Moreover in the case of wider manifolds and consequently large throughflow of exhaust gases, a single discharge tube is incapable of providing a high enough efficiency for the apparatus. If considering a relatively large inter-electrode distance which corresponds to the diameter of the tube used, the voltage necessary for the discharge abruptly rises. If using a longer discharge tube, a reverse dissociation of some products such as carbon dioxide to carbon monoxide may occur.

It is an object of the present invention to eliminate the disadvantages of prior art as hereinabove set forth and to provide an improved device for continuously reducing concentrations of carbon monoxide and other harmful emission types, the device consisting, according to the invention, in that the emission flows through a system comprising a plurality of corona discharge tubes of coaxial wire/cylinder type, said individual corona discharge tubes extending in parallel and being connected in parallel with one another, and each of them being connected, via a suitable resistor, to a common high voltage source. The external electrodes of the system are connected with one another by a condensor.

The merit of the device for continuously reducing concentrations of carbon monoxide and other harmful emission with parallel and coaxial configuration of corona discharge tubes resides, according to the invention, in that even in the case of large-diameter mainfolds with a relatively high emission throughflow the device has a sufficient efficiency at an almost constant operation voltage. Higher output of the deivce is attainable by applying a greater total current to the discharge tube system, the current constituting the total of currents in all of the discharge tubes. By choosing a suitable number of individual discharge tubes in the system as well as the diameters thereof it is made possible to provide a sufficient efficiency of the device with practically constant demand of high voltage of the high-voltage source within a broad range of diameters of exhaust manifolds and of emission flow rates. This fact is of a considerable importance from several aspects such as the realization of the high-voltage source itself, the security of the system, and the use of suitable electro-insulating materials.

In order that the invention be better understood and carried into practice, some preferred embodiments thereof will hereinafter described with reference to the accompanying schematic drawings in which

Fig. 1. shows an axial section of a single corona discharge tube in the system;

Fig. 2 is a cross-sectional view of several discharge tubes in a geometrical configuration; and

Fig. 3 is a similar cross-sectional view showing an alternative configuration of the corona discharge tube system.

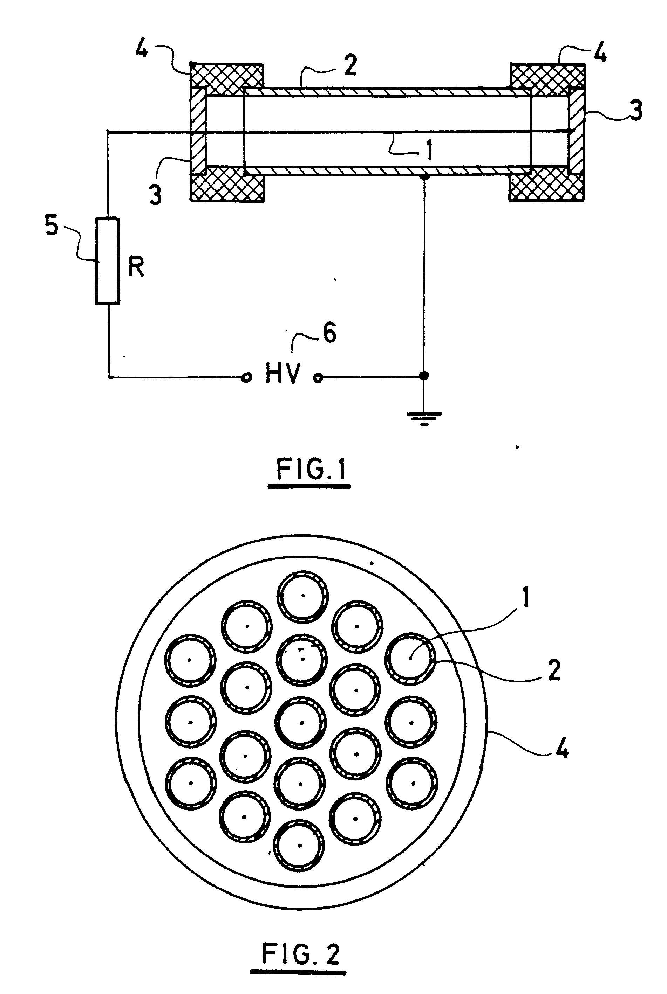

As can be seen in the drawings, and particularly Figure 1 thereof, the coaxial corona discharge tube consists of a high-voltage electrode 1 with a small radius of curvature, an external coaxial cylindrical electrode 2, support elements 3 for the high-voltage electrode 1, electroinsulating material 4, a resistor 5 series-connected with the discharge tube, and a high-voltage source 6.

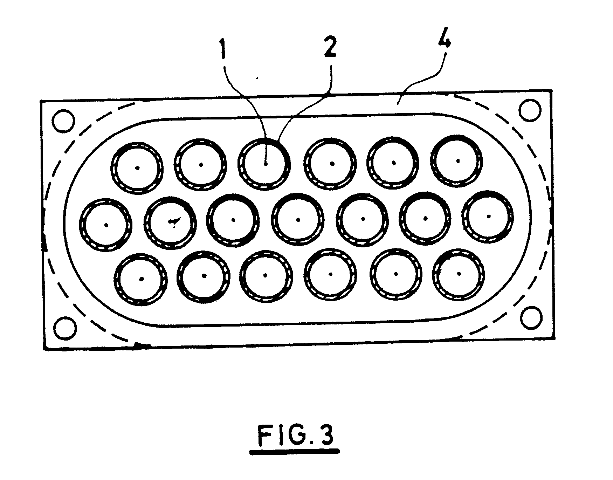

Figure 2 shows a system of nineteen parallel orientated coaxial discharge tubes arranged in a circular configuration, individual tubes being embedded in a block of electroinsulating material while Figure 3 shows a similar system of discharge tubes arranged in an oval configuration.

The device of the invention was carried into practice in the form of a prototype and applied to the exhaust manifold of a motor-car, and particularly in the two embodiments as above described with reference to Figs. 2 and 3, respectively. As hereinabove set forth, the individual discharge tubes are embedded in the electroinsulating material 4 which, as apparent in Fig. 1, insulates the two electrodes 1 and 2 from each other and forms two blocks of which one is attached by means of a flange and an auxiliary pipeline to the exhaust manifold of motor-car. To one of the support elements 3 of the high-voltage electrode 1 there is applied, through resistors 5, with each of the discharge tubes a high voltage from the source 6. The resistor 5 assumes a symmetrizing and stabilizing function with regard to the discharge burning.

If considering a 100 mm length of individual discharge tubes, a 10 mm diameter of the external cylindrical electrode 2 and a 0.2 mm diameter of the central high-voltage electrode 1, the claims on the high-voltage source are the following: The operation voltage in the air is about 6 kV with the total current of 4.2 mA. Whereas the values in emission mixtures individually vary to a considerable extent and depend on the actual composition of the given mixture, deviations from the values in the air with exhaust gases of motor vehicles are not great. After the high-voltage source has been set in operation, a corona discharge beginning to burn in the emission mixture will reduce, in the presence of water vapours, the concentration of carbon monoxide as well as other emission types such as fumes and soot.

In practice, the device according to the present invention can be adapted to various diameters of exhaust manifold, to the throughflow of exhaust gases and to various sources thereof. Its prototype was tested with exhaust gases of a moped and a motor-car. For the moped with 50 cm$^3$ cylinder capacity it is fully sufficient to use a single coaxial metal discharge tube of wire-cylinder type. For motor-cars it is necessary to use about one corona discharge tube for every 50 cu.cm cylinder capacity of the engine.

When the device is to be used for disposing of emissions from factory chimneys, up to several thousands of coaxial corona discharge tubes have to be availed of.

Drops of concentrations of particular components of exhaust gases were determined by infrared absorption spectrometry. It was ascertained that the concentrations of particular components in both polarities of the discharge decreased within the following respective ranges: carbon monoxide from 50 to 100 %; nitrogen oxides ($NO_x$) from 45 to 100 %; hydrocarbons ($CH_x$) more than 90 %; lead (two types of compounds) more than 80%; soot, fumes, both solid and liquid particles more than 90 %.

## Claims

A device for continuously reducing concentrations of carbon monoxide and other harmful emissions from engines etc, comprising a plurality of corona discharge tubes of coaxial wire/cylinder type, the device being characterized in that the individual corona discharged tubes are arranged in geometric configuration and are connected in parallel with one another, and that each of them is connected, via a resistor (5), to a common high-voltage source (6), external electrodes (2) being connected with a condensor.

2. A device according to claim 1, provided with fixing means for fixing the device to the exhaust outlet of a combustion apparatus so that exhaust gases pass therethrough without admixture of air.

3. The use of a device according to claim 1, the device being arranged for passage of emission gases through the discharge tubes without admixture of air.

FIG.1

FIG. 2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WO-A-8702909 (THE FLORIDA STATE UNIVERSITY)<br>* abstract *<br>* page 20, lines 1 - 21; figure 1 *<br>--- | 1 | F01N3/02<br>B03C3/06 |
| Y | PROGRESS IN ENERGY AND COMBUSTION SCIENCE.<br>vol. 11, no. 3, 1985, OXFORD GB<br>pages 193 - 216; saxena:<br>"particulate removal from high-temperature, high-pressure combustion gases"<br>* figures 18, 19 *<br>--- | 1 | |
| A | US-A-4587807 (SUZUKI)<br>* abstract *<br>* column 3, line 1 - column 4, line 4; figure 1 *<br>--- | 1 | |
| A | DE-A-3141156 (ROBERT BOSCH)<br>* abstract *<br>* page 6, line 14 - page 8, line 22; figure 1 *<br>--- | 1 | |
| A | DE-A-3500373 (ROBERT BOSCH)<br>* abstract; figures 1, 2 *<br>* pages 8 - 12 *<br>--- | 1 | TECHNICAL FIELDS SEARCHED (Int. Cl.5)<br><br>F01N<br>B03C |
| A | DE-B-1080349 (SFINDEX)<br>* column 6, line 55 - column 7, line 20; figures 10, 11 *<br>--- | 1 | |
| A | US-A-4253925 (MASON)<br>--- | | |
| A | US-A-2567709 (HEDBERG)<br>----- | | |

The present search report has been drawn up for all claims

| Place of search | Date of completion of the search | Examiner |
|---|---|---|
| THE HAGUE | 20 SEPTEMBER 1989 | ERNST J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)